# EUROPÄISCHE PATENTSCHRIFT

(11) **EP 2 423 855 B1**
(45) Veröffentlichungstag und Bekanntmachung des Hinweises auf die Patenterteilung: **03.10.2012**
(21) Anmeldenummer: 10173836.7
(22) Anmeldetag: 24.08.2010
(51) Int. Cl.: G06K 19/077

(54) **Induktiv gekoppelter RFID-Transponder**
Inductive coupled RFID transponder
Transpondeur RFID couplé inductif

(43) Veröffentlichungstag der Anmeldung: 29.02.2012
(73) Patentinhaber: Siemens Aktiengesellschaft, 80333 München (DE)
(72) Erfinder: Kube, Roland, 90513, Zirndorf (DE); Stadelmann, Bernd, 91349, Egloffstein (DE)

(56) Entgegenhaltungen:
- WO-A1-2009/050662
- WO-A2-03/030093
- DE-T2- 69 324 093

## Beschreibung

Die Erfindung betrifft einen RFID-Transponder mit einem Gehäuse für die Montage auf oder in einem Werkstück mit einer metallischen Oberfläche gemäß dem Oberbegriff des Patentanspruchs 1.

Zur Kennzeichnung von Waren, Maschinen und anderen Gegenständen werden häufig mobile Datenspeicher eingesetzt, welche berührungslos ausgelesen werden können. Dabei werden die optisch lesbaren Barcode-Etiketten zunehmend durch elektromagnetische oder magnetisch schreib- und lesbare RFID-Etiketten (RFID = Radio-frequency Identification), auch RFID-Transponder genannt, ersetzt. Diese RFID-Transponder kommen in einer bevorzugten Ausführungsform ohne eigene Energieversorgung, beispielsweise Batterie, aus.

Bei RFID-Transpondern werden je nach Einsatzfall unterschiedliche Technologien eingesetzt. So werden beispielsweise zur Etikettierung von Kleidungsstücken und andere Fernfeld-Anwendungen die RFID-Transponder per Funk, also mittels elektromagnetischer Wellen, mit dem Lesegerät gekoppelt. Im Folgenden sollen jedoch induktiv gekoppelte RFID-Transponder betrachtet werden. Diese sind mittels eines magnetischen Wechselfeldes mit einem Schreib- und Lesegerät, kurz: Lesegerät, koppelbar und werden häufig bei industriellen Anwendungen eingesetzt, bei denen kurze Distanzen überbrückt werden müssen (sog. Nahfeld-Erfassung).

Die induktiv gekoppelten RFID-Transponder weisen regelmäßig eine oder mehrere Sende- und Empfangsspulen auf, mit denen der von einem Lesegerät erzeugte magnetische Fluss in eine Wechselspannung umgesetzt wird, wobei diese Wechselspannung zum einen die Betriebselektronik des RFID-Transponders mit Energie versorgt, und zum anderen Informationen enthält, die von dem Lesegerät zu dem RFID-Transponder übertragen werden, und umgekehrt. Zur Funktion des RFID-Transponder ist es unerlässlich, dass der vom Lesegerät erzeugte magnetische Fluss im Wesentlichen durch die Fläche der Spule geleitet wird, was jedoch in den Fällen problematisch ist, in denen der RFID-Transponder auf einer metallischen Oberfläche beziehungsweise in einer Mulde eines metallischen Werkstücks betrieben wird. In diesen Fällen wird oft ein großer Teil des magnetischen Flusses durch das metallische Werkstück und seitlich an der Sende- und Empfangsspule (kurz: Spule) vorbei geleitet, wobei die Energie des magnetischen Wechselfeldes zu einem großen Teil durch Wirbelstromverluste in Wärme umgesetzt wird und somit nicht mehr zur Versorgung des RFID-Transponders zur Verfügung steht. Umgekehrt werden auch die Aussendungen des RFID-Transponders bei einer Anordnung auf einem metallischen Werkstück zu einem großen Teil direkt in das metallische Werkstück geleitet, so dass ebenfalls eine unerwünschte Dämpfung zu beobachten ist.

Zur Lösung des Problems ist es bekannt, zwischen der Sende-und Empfangsspule des RFID-Transponders und einer metallischen Oberfläche beziehungsweise einem metallischen Werkstück einen Ferritkern (dazu gehören auch plattenförmige und topfförmige Bauteile aus Ferrit-material) vorzusehen, wodurch der magnetische Fluss, also die magnetischen Feldlinien, im Wesentlichen von einer dem metallischen Werkstück entgegensetzten Empfangsseite kommend durch die Fläche der Sende- und Empfangsspule geleitet und danach von dem metallischen Werkstück weg wieder zur Empfangsseite geleitet werden.

Das Einbringen eines Ferritkerns ist jedoch mit einigen Nachteilen verbunden. So ist die Montage dieses Bauteils ein zusätzlicher Fertigungsschritt, wobei oft separate Abstandshalter zur Beabstandung des Ferritkerns zu der metallischen Oberfläche des metallischen Werkstücks vorgesehen werden müssen. Ferritkerne weisen weiterhin den Nachteil auf, dass sie sehr spröde sind und daher von einem Anwender nachträglich kaum bearbeitet werden können. Daher müssen Ferritkerne meist in ihrer endgültig erforderlichen Form von einem Hersteller bezogen werden, so dass eine nachträgliche Änderung des Designs des RFID-Transponders, beispielsweise Änderungen in den Abmessungen der Spule oder eines Gehäuses, dazu führen, dass eine neue Serie von Ferritkernen konstruiert, bestellt, gefertigt und geliefert werden muss. Auch das Montieren der Ferritkerne ist mit Aufwand verbunden, weil aufgrund des spröden Materials die Gefahr von Rissen und Brüchen besteht. Auch ein bereits fertig gestellter Transponder, welcher einen solchen Ferritkern aufweist, ist empfindlich gegen mechanische Einwirkungen, die zu Rissen und Brüchen im Ferrit und damit zu einer Verschlechterung der maximalen Lese- und Empfangsdistanz (Reichweite) führen können. Daher ist es üblich, die Transponder mit Ferrit Kerner in schlagfesten Kunststoffgehäusen zu kapseln, welche die mechanischen Belastungen aufnehmen. Dies erhöht jedoch die Baugröße der dieserart aufgebauten RFID-Transponder.

DE 69324093 T2 offenbart einen RFID-Transponder mit einem Gehäuse und einer Aluminium abschirmung.

Es ist daher eine Aufgabe der vorliegenden Erfindung, eine Alternative zu den in dem RFID-Transponder verwendeten Ferritkernen anzugeben, welche kostengünstig und einfach und flexibel zu fertigen ist, mechanisch robust ist, und zu einer reduzierten Baugröße der RFID-Transponder führen.

Es ist eine zentrale Idee der erfindungsgemäßen Lösung dieser Aufgabe, zur Führung des magnetischen Flusses in RFID-Transpondern ein Bauteil aus einem so genannten Ferrit-Compound, also einer Kunststoffspritzmischung aus einem Polyamid und einem Ferritpulver, vorzusehen.

Die Lösung der Aufgabe sieht insbesondere einen RFID-Transponder gemäß dem Patentanspruch 1 vor. Dabei wird ein RFID-Transponder mit einem Gehäuse für die Montage auf oder in einem Werkstück mit einer metallischen Oberfläche vorgeschlagen, wobei der RFID-Transponder zur induktiven Kopplung mit einem RFID-Lesegerät vorgesehen ist, und wobei die der metallischen Oberfläche zuzuwendende Seite des RFID-Transponders mit einem Ferritbauteil zur Führung des magnetischen Flusses von und zu einer der metallischen Oberfläche abzuwendenden Seite des RFID-Transponders versehen ist. Dabei besteht das Ferritbauteil aus einem Verbundwerkstoff aus einem ersten Kunststoff und Ferritpulver, und bildet einen der metallischen Oberfläche zuzuwendenden ersten Teil des Gehäuses. Ein solcher RFID-Transponder kann auch in kleinen Stückzahlen kostengünstig hergestellt werden, weil die Formgebung für das Ferritbauteil durch das einfache Ausgestalten einer Kunststoff-Spritzgießform definiert werden kann. Ein solcher RFID-Transponder ist sowohl während der Fertigung als auch bei seinem Einsatz wesentlich robuster gegenüber mechanischen Einwirkungen, als eine Ausführungsform mit einem konventionellen Ferritkern. Zudem kann bei einem solchen RFID-Transponder das Ferritbauteil die Funktion des dem metallischen Werkstück zugewandten Gehäuseteils übernehmen, so dass kein weiteres Gehäuse auf dieser Seite des RFID-Transponders vorgesehen werden muss.

Vorteilhafte Ausgestaltungen des erfindungsgemäßen RFID-Transponders sind in den abhängigen Patentansprüchen angegeben.

Dabei kann der RFID-Transponder derart ausgestaltet sein, dass das Gehäuse zumindest einen zweiten Teil zur Bedeckung des RFID-Transponders in Sende- und Empfangsrichtung aufweist, wobei der zweite Teil des Gehäuses aus einem zweiten Kunststoff gebildet ist, und wobei der erste und der zweite Teil miteinander verbunden sind. Dadurch ergibt sich ein geschlossenes, wasser- und staubdichtes Gehäuse.

Vorteilhaft können für beide Gehäusehälften, also sowohl für das Ferritbauteil als auch für die gegenüberliegende Abdeckung, ein Polyamid verwendet werden, wobei Polyamid sich zum einen einfach verarbeiten lassen, und zum anderen eine gute Resistenz gegenüber mechanischen und chemischen Umwelteinflüssen aufweist. Ein weiterer Vorteil liegt darin, dass sich die beiden Gehäusehälften durch gängige Fügeverfahren, insbesondere durch Ultraschall-verschweißen, leicht miteinander verbinden lassen. Während das Ferritbauteil aus einem Kunststoff, vorzugsweise Polyamid, mit eingebettetem Ferritpulver, also mit einer MnZn-Beimischung, gefertigt ist, kann die zweite Gehäusehälfte aus einem Polyamid mit Glasfaserverstärkung ("PA-GF") hergestellt sein, was die mechanische Belastbarkeit des RFID-Transponders weiter erhöht.

Die Fertigung des Ferritbauteils mittels eines Spritzgießverfahrens ermöglicht es weiterhin, an die dem metallischen Werkstück zugewandte Seite Abstandshalter anzuformen, womit ein wesentlicher Teil der dem metallischen Werkstück beziehungsweise der metallischen Oberfläche zugewandten Seite des RFID-Transponders von der metallischen Oberfläche beabstandet wird. Dadurch wird verhindert, dass ein signifikanter Anteil des magnetischen Flusses in das metallische Werkstück eingeleitet wird. Durch das Anformen der Abstandshalter an das Ferritbauteil entfällt vorteilhafter Weise der sonst dafür notwendige separate Montageschritt.

Eine geringere Bauhöhe des RFID-Transponders und eine bessere Führung des magnetischen Flusses wird erreicht, wenn das Ferritbauteil an seiner dem RFID-Transponder zugewendeten Seite eine im Wesentlichen ringförmige Vertiefung zur Aufnahme der Sende- und Empfangsspule aufweist. Durch eine Herstellung mittels eines Spritzgießverfahrens lässt sich eine solche Vertiefung mit nahezu beliebiger Geometrie ohne einen zusätzlichen Fertigungsschritt herstellen.

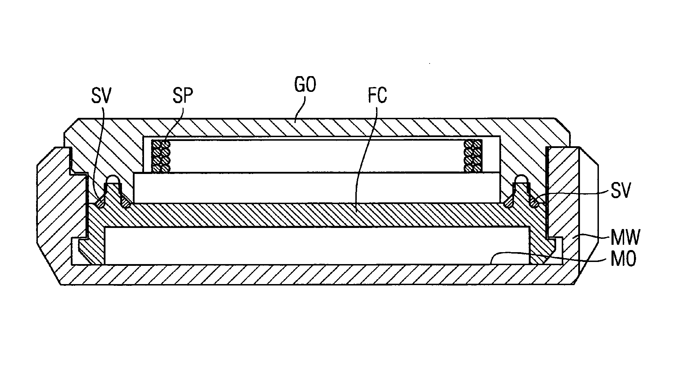

Ein Ausführungsbeispiel eines erfindungsgemäßen RFID-Transponders wird nachfolgend anhand der Zeichnung beschrieben.

Dabei zeigt die einzige Figur in einer schematisch vereinfachten Darstellung einen Schnitt durch einen erfindungsgemäßen RFID-Transponder.

In der Figur ist in einer schematischen Schnittdarstellung ein metallisches Werkstück MW aus einem ferromagnetischem Material mit einer metallischen Oberfläche MO gezeigt. Das metallische Werkstück MW ist dabei nur ausschnittsweise dargestellt, also in einem Bereich, der eine Vertiefung zur Aufnahme eines RFID-Transponders aufweist. Anstelle der Ausgestaltung einer Vertiefung zur Aufnahme oder zum Einrasten eines RFID-Transponders können auch glatte Oberflächen metallischer Werkstücke MW betrachtet werden, auf die RFID-Transponder aufgeklebt, aufgeschraubt oder anderweitig befestigt werden können. Der RFID-Transponder weist eine (nicht detailliert dargestellte) Betriebselektronik auf, welche mit einer Sende- und Empfangsspule SP verbunden ist. Von der Spule SP sind in der Schnittdarstellung nur einige Wicklungen exemplarisch dargestellt. Obwohl der hier gezeigte RFID-Transponder im Wesentlichen rund, also rotationssymmetrisch, aufgebaut ist, kann beispielsweise die Spule SP in einer Draufsicht auch rechteckig oder in einer anderen Geometrie ausgeformt sein.

Im Folgenden sei angenommen, dass bezogen auf die Darstellung in der Figur ein RFID-Lesegerät im Wesentlichen oberhalb der gezeigten Anordnung angeordnet ist, so dass die den magnetischen Fluß beschreibenden Feldlinien die von der Spule SP aufgespannte Fläche im Wesentlichen senkrecht durchdringen, durch ein Ferritbauteil FC ("Ferrit Compound") seitlich abgelenkt und im Randbereich des Ferritbauteils FC im Wesentlichen senkrecht, d.h. bezogen auf die Abbildung nach oben, ausgeleitet werden, und umgekehrt.

Das Ferritbauteil FC ist ein Kunststoff-Spritzgießteil aus einem Polyamid-Material, welchem Ferritpartikel bzw. Ferritpulver, also eine Zink-Mangan-Verbindung, bei der Herstellung beigemischt wurde. Dadurch ist das Ferritbauteil weichmagnetisch und weist daher eine schmale Hysteresekurve auf. Außerdem ist das Ferritbauteil elektrisch nicht leitend, dafür aber, wie beschrieben, magnetisch "leitend".

Der RFID-Transponder, der im Wesentlichen aus der Spule SP, der (nicht explizit dargestellten) Betriebselektronik und dem Ferritbauteil FC gebildet wird, weist weiterhin einen zweiten Gehäuseteil GO (Gehäuse-Oberteil) aus glasfaserverstärktem Polyamid auf, welches keine Ferritpartikel aufweist und somit magnetisch "neutral" ist; dieses Gehäuseteil GO ist mit einer ringförmigen Schweißverbindung SV derart mit dem Ferritbauteil FC verschweißt, dass die Spule SP und die Betriebselektronik wasser- und staubdicht eingekapselt sind. Im vorliegenden Ausführungsbeispiel ist die Schweißverbindung SV durch Ultraschall-Verschweißen hergestellt worden, wodurch ein unerwünschtes Erwärmen der Betriebselektronik während des Fügevorgangs vermieden wird. Alternativ können das Ferritbauteil FC und das Gehäuse-Oberteil GO jedoch auch durch Kleben, durch Laserverschweißen oder durch Verpressen gefügt werden.

An der - bezogen auf die Darstellung in der Figur - Unterseite des Ferritbauteils FC sind Abstandshalter zu der magnetischen Oberfläche MO angeformt, die in diesem Ausführungsbeispiel gleichzeitig als Haken einer Kunststoff-Schnappverbindung ausgestaltet sind, die in die Vertiefung des metallischen Werkstücks MW eingreifen. Bei diesem Abstandshalter handelt es sich nicht um eine vollständig ringförmige Anformung an das Ferritbauteil FC, sondern um eine Anzahl (hier: 2) einzelner Rast-Nasen. Durch diese vergleichsweise kleinen Kontaktflächen zwischen dem Ferritbauteil FC und der metallischen Oberfläche MO ist dabei sichergestellt, dass ein Großteil der durch die Fläche der Spule SP ein- bzw. austretenden Feldlinien wieder in Sende- und Empfangsrichtung ausgeleitet werden, und nicht etwa in das metallische Werkstück MW eindringen.

In einer alternativen, nicht dargestellten Ausführungsform kann analog zu dem separaten Gehäuse-Oberteil GO auch ein zusätzliches Gehäuse-Unterteil (zweite Gehäuseschale) vorgesehen sein, welches das Ferritbauteil FC an seiner - bezogen auf die Figur - Unterseite bzw. seitlich bedeckt und derart als Abstandshalter fungiert.

## Patentansprüche

1. RFID-Transponder mit einem Gehäuse für die Montage auf oder in einem Werkstück (MW) mit einer metallischen Oberfläche (MO),
wobei der RFID-Transponder zur induktiven Kopplung mit einem RFID-Lesegerät vorgesehen ist,
wobei die der metallischen Oberfläche (MO) zuzuwendende Seite des RFID-Transponders mit einem Ferritbauteil (FC) zur Führung des magnetischen Flusses von und zu einer der metallischen Oberfläche (MO) abzuwendenden Seite des RFID-Transponders versehen ist,
**dadurch gekennzeichnet,**
**dass** das Ferritbauteil (FC) aus einem Verbundwerkstoff aus einem ersten Kunststoff und Ferritpulver besteht und einen der metallischen Oberfläche (MO) zuzuwendenden ersten Teil des Gehäuses bildet.

2. RFID-Transponder nach Patentanspruch 1,
durch gekennzeichnet,
dass das Gehäuse zumindest einen zweiten Teil (GO) zur Bedeckung des RFID-Transponders in Sende- und Empfangsrichtung aufweist, wobei der zweite Teil (GO) des Gehäuses aus einem zweiten Kunststoff gebildet ist, und wobei der erste und der zweite Teil (GO) miteinander verbunden sind.

3. RFID-Transponder nach einem der vorhergehenden Patentansprüche,
**dadurch gekennzeichnet,**
**dass** der erste und/oder der zweite Kunststoff ein Polyamid ist.

4. RFID-Transponder nach einem der Patentansprüche 2 oder 3,
**dadurch gekennzeichnet,**
**dass** der erste und der zweite Gehäuseteil (GO) mittels Ultraschall-Schweißen gefügt sind.

5. RFID-Transponder nach einem der vorhergehenden Patentansprüche,
**dadurch gekennzeichnet,**
**dass** der erste Gehäuseteil mittels eines Spritzgießverfahrens hergestellt ist.

6. RFID-Transponder nach einem der vorhergehenden Patentansprüche,
**dadurch gekennzeichnet,**
**dass** an dem ersten Gehäuseteil Abstandshalter zur Vermeidung eines vollflächigen Kontaktes des ersten Gehäuseteils mit der metallischen Oberfläche (MO) angeformt sind.

7. RFID-Transponder nach einem der vorhergehenden Patentansprüche,
**dadurch gekennzeichnet,**
**dass** der erste Gehäuseteil an seiner dem RFID-Transponder zugewendeten Seite eine im Wesentlichen ringförmige Vertiefung zur Aufnahme einer Sende- und Empfangsspule des RFID-Transponders aufweist.

## Claims

1. RFID transponder comprising a housing for mounting on or in a workpiece (MW) having a metallic surface (MO),
wherein the RFID transponder is provided for inductive coupling to an RFID reader,
wherein that side of the RFID transponder which is to face the metallic surface (MO) is provided with a ferrite component (FC) for guiding the magnetic flux from and to a side of the RFID transponder which is to face away from the metallic surface (MO),
**characterized**
**in that** the ferrite component (FC) consists of a composite material composed of a first plastic and ferrite powder and forms a first part of the housing, which first part is to face the metallic surface (MO).

2. RFID transponder according to Patent Claim 1,
**characterized**
**in that** the housing has at least one second part (GO) for covering the RFID transponder in a transmitting and receiving direction, wherein the second part (GO) of the housing is formed from a second plastic and wherein the first and the second part (GO) are connected to one another.

3. RFID transponder according to either of the preceding patent claims,
**characterized**
**in that** the first and/or the second plastic are/is a polyamide.

4. RFID transponder according to either of Patent Claims 2 and 3,
**characterized**
**in that** the first and the second housing part (GO) are joined by means of ultrasonic welding.

5. RFID transponder according to any of the preceding patent claims,
**characterized**
**in that** the first housing part is produced by means of an injection molding method.

6. RFID transponder according to any of the preceding patent claims,
**characterized**
**in that** spacers for avoiding a whole-area contact of the first housing part with the metallic surface (MO) are integrally formed on the first housing part.

7. RFID transponder according to any of the preceding patent claims,
**characterized**
**in that** the first housing part has, on its side facing the RFID transponder, a substantially ring-shaped depression for receiving a transmitting and receiving coil of the RFID transponder.

## Revendications

1. Transpondeur RFID ayant un boîtier pour le montage sur ou dans une pièce ( MW ) ayant une surface ( MO ) métallique,
dans lequel le transpondeur RFID est prévu pour le couplage inductif avec un appareil de lecture RFID,
dans lequel le côté, tourné vers la surface ( MO ) métallique, du transpondeur RFID est pourvu d'un module ( FC ) de ferrite pour le guidage du flux magnétique pour le faire aller vers d'un côté du transpondeur RFID éloigné de la surface ( MO ) métallique et pour l'en éloigner,
**caractérisé en ce que** le module ( FC ) de ferrite est en un matériau composite composé d'une première matière plastique et de poudre de ferrite et forme une première partie du boîtier tournée vers la surface ( MO ) métallique.

2. Transpondeur RFID suivant la revendication 1, **caractérisé en ce que** le boîtier a au moins une deuxième partie ( GO ) de recouvrement du transpondeur RFID dans la direction d'émission et de réception, la deuxième partie ( GO ) du boîtier étant en une deuxième matière plastique et la première et la deuxième parties ( GO ) étant reliées l'une à l'autre.

3. Transpondeur RFID suivant l'une des revendications précédentes,
**caractérisé en ce que** la première et/ou la deuxième matière plastique est un polyamide.

4. Transpondeur RFID suivant l'une des revendications 2 ou 3,
**caractérisé en ce que** la première et la deuxième parties ( 60 ) du boîtier sont jointes au moyen d'une soudure par ultrason.

5. Transpondeur RFID suivant l'une des revendications précédentes,
**caractérisé en ce que** la première partie du boîtier est fabriquée par un procédé de moulage par injection.

6. Transpondeur RFID suivant l'une des revendications précédentes,
**caractérisé en ce que** sur la première partie de boîtier sont formées des entretoises pour empêcher un contact de pleine surface de la première partie du boîtier avec la surface ( MO ) métallique.

7. Transpondeur RFID suivant l'une des revendications précédentes,
**caractérisé en ce que** la première partie du boîtier a sur son côté tourné vers le transpondeur RFID une cavité sensiblement annulaire de réception d'une bobine d'émission et de réception du transpondeur RFID.
